(19) **Europäisches Patentamt / European Patent Office / Office européen des brevets**

(11) **EP 2 629 967 B1**

(12) **FASCICULE DE BREVET EUROPEEN**

(45) Date de publication et mention
de la délivrance du brevet:
**30.12.2015 Bulletin 2015/53**

(51) Int Cl.:
***B29D 30/06*** (2006.01)      ***B29C 33/02*** (2006.01)
***B29C 35/02*** (2006.01)      ***B29L 30/00*** (2006.01)

(21) Numéro de dépôt: **11764753.7**

(22) Date de dépôt: **06.10.2011**

(86) Numéro de dépôt international:
**PCT/EP2011/067468**

(87) Numéro de publication internationale:
**WO 2012/052299 (26.04.2012 Gazette 2012/17)**

(54) **DISPOSITIF DE VULCANISATION D'UN PNEUMATIQUE COMPORTANT UNE ENCEINTE DE REPRISE INTERNE**

VORRICHTUNG ZUR VULKANISIERUNG EINES REIFENS MIT EINER INNEREN UMFORMUNGSHÜLLE

DEVICE FOR VULCANIZING A TIRE COMPRISING AN INNER RESHAPING ENVELOPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.10.2010 FR 1058523**

(43) Date de publication de la demande:
**28.08.2013 Bulletin 2013/35**

(73) Titulaires:
• **Compagnie Générale des Etablissements Michelin**
**63000 Clermont-Ferrand (FR)**
• **Michelin Recherche et Technique S.A.**
**1763 Granges-Paccot (CH)**

(72) Inventeurs:
• **JEANNOUTOT, Nicolas**
**F-63040 Clermont-Ferrand Cedex 9 (FR)**
• **CAMBON, Jean-Claude**
**F-63040 Clermont-Ferrand Cedex 9 (FR)**
• **MASSOPTIER-DAVID, Michaël**
**F-63040 Clermont-Ferrand Cedex 9 (FR)**
• **FERRAND, Jean-Charles**
**F-63040 Clermont-Ferrand Cedex 9 (FR)**

(74) Mandataire: **Noel, Luminita et al**
**Manufacture Française**
**Des Pneumatiques Michelin**
**DGD/PI F35/Ladoux**
**23, Place des Carmes-Déchaux**
**63040 Clermont-Ferrand Cedex 9 (FR)**

(56) Documents cités:
**JP-A- 2000 158 448      US-A- 4 245 971**
**US-A- 5 820 886      US-A- 5 866 170**

**Description**

L'invention concerne le domaine de la vulcanisation des pneumatiques et s'intéresse plus particulièrement aux dispositifs de vulcanisation. Ces dispositifs sont connus par exemple des documents US 5866170-A, US 4245 971-A et JP 2000 158 448-A.

Traditionnellement, ces dispositifs sont formés d'une cuve ou d'une presse comprenant une cuve inférieure et une cuve supérieure, ou couvercle, qui ont pour fonction de contenir le moule et de le maintenir en position fermée pendant la durée de la vulcanisation. En règle générale, le moule est relié à la presse par deux surfaces planes plus communément dénommées plateaux.

Le moule, spécifique à une dimension de pneumatique, est formé par l'ensemble des pièces destinées à être mises en contact avec le pneumatique à vulcaniser et comprend, des coquilles inférieures et supérieures destinées à mouler la zone des flancs, des anneaux talons inférieurs et supérieurs destinés à mouler les bourrelets et la zone basse des flancs, ainsi qu'un ensemble de secteurs, portant l'empreinte de la bande de roulement et mobiles radialement sous l'action d'une couronne de serrage.

Les parois internes des pièces du moule définissent un volume intérieur destiné à être mis en contact avec l'ébauche de pneumatique non vulcanisée. A l'intérieur du pneumatique un fluide caloporteur sous pression permet d'appliquer la pression et de plaquer l'ébauche contre les parois internes du moule ainsi que d'apporter l'énergie thermique nécessaire à la vulcanisation. Des dispositifs de chauffage peuvent également être disposés entre les pièces de moule et la cuve pour maintenir le moule à la température désirée.

En règle générale, une membrane de cuisson est installée dans la partie interne centrale entre deux plateaux inférieur et supérieur, et se déploie sous l'effet de la pression du fluide caloporteur, de manière à s'interposer entre ledit fluide caloporteur et la partie radialement interne du pneumatique.

Un moyen de fermeture permet de maintenir la cuve en position fermée pendant la durée de la vulcanisation. Dans cette configuration traditionnelle, le moule est précontraint par la presse avant l'application de la pression interne. Aussi, lors de la montée en pression, si cette pression n'engendre pas d'efforts supérieurs aux efforts de précontrainte, le moule ne s'ouvre pas.

La pression interne peut générer des efforts de l'ordre de 100 tonnes pour un pneumatique tourisme et de plus de 250 tonnes pour un pneumatique poids lourd et peuvent dépasser plusieurs milliers de tonnes pour un pneumatique de génie civil.

La cuve de vulcanisation coopère avec l'ensemble des dispositifs destinés à supporter et à animer les mouvements des pièces de moule, de manière à autoriser l'ouverture et la fermeture de la cuve et du moule, lors des manoeuvres d'introduction et d'extraction du pneumatique, avant et après l'étape de vulcanisation.

Ces dispositifs d'animation ont également pour fonction d'exercer les efforts de précontrainte sur chacune des pièces de moule. Aussi, traditionnellement, chaque cuve, ou paire de cuve, dispose de l'ensemble des moyens d'animation et demeure fixe à un emplacement donné.

On observe toutefois que, pendant la durée de la vulcanisation, certains de ces moyens restent inactifs. Et, dans un soucis de réduire le montant des investissements liés à la création d'un atelier de cuisson, les évolutions technologiques récentes ont conduit à développer des dispositifs de vulcanisation, de type container, dans lesquels une boite contenant le moule et le pneumatique se déplace autant que dé besoin vers un poste de manoeuvre fixe disposant des actionneurs destinés à réaliser les opérations d'ouverture et de fermeture de la boite et du moule et d'extraction d'introduction du pneumatique.

La boite, une fois fermée, est reliée aux seuls moyens permettant de réguler la température du moule et de maintenir le volume intérieur sous pression, et peut alors être amenée de manière autonome vers un emplacement dédié, distant des moyens de manoeuvre, pendant la durée de l'opération de vulcanisation proprement dite.

Plusieurs types de boite ont été développés par les manufacturiers. Selon un premier type, la boite comporte deux plateaux massifs reliés par des colonnettes de section suffisante pour reproduire les fonctions de serrage d'une presse traditionnelle. Le moule est précontraint sous l'effet de l'allongement des colonnettes. Ce type de boite relativement lourde présente l'inconvénient de faire appel à des actionneurs puissants pour exercer les efforts de précontrainte lors de la fermeture.

Selon un deuxième type, la boite n'est pas précontrainte et se verrouille sous l'effet de la pression interne générée par le fluide caloporteur. Ce type de boite est connue sous l'appellation de boite autobloquante. Il résulte de ce type d'agencement que la pression interne qui a pour effet de provoquer l'ouverture des pièces de moules les unes par rapport aux autres sont repris par des moyens de verrouillage et de serrage mécaniques susceptibles de maintenir la boite et le moule en position fermée et d'augmenter les efforts de serrage en proportion de l'augmentation de la pression interne pendant toute la durée de la vulcanisation. Les moyens d'ouverture et de fermeture en sont allégés d'autant et se limitent à la seule manutention des pièces composant la boite et le moule sans avoir à délivrer des efforts de serrage importants.

Le document US 5820886 - A révèle un dispositif de vulcanisation d'un pneumatique, ledit dispositif comprenant:

-    une boite de vulcanisation cylindrique formée d'une cuve inférieure et d'une cuve supérieure, mobiles axialement l'une par rapport à l'autre;
-    des moyens de verrouillage de la cuve inférieure et de la cuve supérieure aptes à maintenir les dites cuve inférieure et supérieure en position fermée pendant la durée de la vulcanisation;

la dite boite définissant une enceinte contenant:

- un moule dont les parois internes sont destinées à venir en contact avec le pneumatique;
- un plateau inférieur et un plateau supérieur venant respectivement en appui sur les portées radialement internes des parties du moule destinées à mouler le talon inférieur et le talon supérieur du pneumatique, lorsque la cuve est en position fermée, de sorte que, lorsque la cuve est en position fermée, les parois internes du moule et des plateaux inférieur et supérieur définissent un volume intérieur fermé destiné à recevoir un fluide caloporteur.

Toutefois, en l'absence de précontrainte, la pression interne entraîne des déformations élastiques des pièces de la boite et du moule, et ne permet pas de supprimer tous les jeux susceptibles d'apparaître entre les différentes pièces du moule. Il en résulte des mouvements préjudiciables des pièces de moule les unes par rapport aux autres, ce qui peut conduire à modifier de manière non désirée la qualité et la géométrie du pneumatique.

L'invention a pour objet d'apporter une solution originale à ce problème.

Le dispositif de vulcanisation selon l'invention comme défini dans la revendication 1, comprend une boite de vulcanisation cylindrique d'axe XX' formée d'une cuve inférieure et d'une cuve supérieure, mobiles axialement l'une par rapport à l'autre. Ce dispositif comprend également des moyens de verrouillage de la cuve inférieure et de la cuve supérieure, aptes à maintenir lesdites cuves inférieure et supérieure en position fermée pendant la durée de la vulcanisation. La cuve définit une enceinte contenant

- un moule dont les parois internes sont destinées à venir en contact avec le pneumatique,
- un plateau inférieur et un plateau supérieur venant respectivement en appui sur les portées radialement internes des parties du moule destinées à mouler le talon supérieur et le talon inférieur dudit pneumatique lorsque la cuve est en position fermée,

de sorte que, lorsque la cuve est en position fermée, les parois internes du moule et des plateaux inférieur et supérieur définissent un volume intérieur fermé destiné à accueillir un fluide caloporteur à une pression $P_1$, la projection dudit volume intérieur sur un plan perpendiculaire à l'axe XX' définissant une surface dont l'aire est égale à $S_1$.

Le dispositif selon l'invention se caractérise en ce qu'une enceinte de reprise destinée à accueillir un fluide à une pression $P_2$, et comprenant une paroi mobile axialement sous l'action dudit fluide, est disposée axialement entre les parois axialement externe des pièces du moule et la cuve de vulcanisation, la projection dudit volume de ladite enceinte de reprise sur un plan perpendiculaire à l'axe XX' définissant une surface dont l'aire est égale à $S_2$, telle que $S_2*P_2$ soit supérieur à $S_1*P_1$ de sorte que, lorsque le dispositif est verrouillé et mis sous pression, la paroi mobile exerce sur les pièces du moule une force axiale supérieure à la résultante des forces axiales exercées par le fluide caloporteur sur les pièces du moule, et tendant provoquer l'ouverture axiale des pièces dudit moule.

La mise sous pression de l'enceinte de reprise permet de s'opposer aux forces axiales engendrées par le fluide caloporteur sous pression et de reprendre tous les jeux entre les pièces du moule et pouvant survenir pendant cette phase de la vulcanisation. Cet artifice permet également de rompre la liaison mécanique entre les moyens de manoeuvre et la boite pendant toute la durée de la vulcanisation du pneumatique. Des formes préférentielles de l'invention sont définies dans les revendications dépendantes.

Avantageusement les parois de l'enceinte de reprise sont formées par une membrane souple de surface $S_2$ de manière à permettre le mouvement axial de la paroi de l'enceinte qui est en contact avec les pièces de moule.

Alternativement les parois de l'enceinte de reprise peuvent être formées par des parois rigides formant une chambre annulaire dans laquelle se déplace axialement une paroi mobile de surface $S_2$.

Il peut être avantageux également de choisir une enceinte de reprise pour laquelle l'aire de la surface $S_2$ est supérieure à l'aire de la surface $S_1$, ce qui permet d'avoir une pression $P_2$ inférieure et de préférence égale à de la pression $P_1$. Il est alors possible d'introduire le fluide caloporteur à la même pression P, simultanément dans le volume intérieur du pneumatique et dans l'enceinte de reprise.

De manière connue, le moule peut comprendre :

- une coquille et un anneau talon inférieur et une coquille et un anneau talon supérieur, destinés à mouler les flancs et le talon du pneumatique, et aptes à se rapprocher axialement l'un de l'autre,
- une pluralité de secteurs répartis circulairement portant l'empreinte destinée à mouler la bande dé roulement et aptes à se déplacer radialement et, lorsque la cuve est en position fermée, à venir en contact, avec les coquilles inférieure et supérieure lors du déplacement des segments dans la direction radialement interne,

Dans ce cas de figure les secteurs se déplacent radialement sous l'action d'au moins une couronne de serrage circulaire, solidaire des mouvements de la cuve inférieure ou/et de la cuve supérieure, et coopérant avec les faces radialement externes desdits secteurs.

Il est alors avantageux de disposer l'enceinte de reprise axialement entre la cuve et la face axialement externe d'une couronne, de sorte que la force axiale exercée par la paroi mobile de l'enceinte de reprise sur ladite couronne lorsque le fluide contenu par ladite enceinte de reprise est porté à la pression $P_2$, exerce un complément de serrage radial sur lesdits secteurs.

De même, on peut intercaler entre le moule et l'enceinte de reprise un plateau chauffant sur lequel sont fixés, une couronne de serrage des secteurs, une coquille et un anneau talon. L'enceinte de reprise est alors placée entre la paroi axialement externe du plateau chauffant et la cuve.

De manière connue, une membrane élastique souple de forme sensiblement cylindrique peut être fixée par ses deux extrémités axiales sur les plateaux inférieurs et supérieurs de manière à s'interposer entre la surface interne du pneumatique et le fluide caloporteur.

Enfin, lorsque le plateau supérieur est porté par une tige de manoeuvre dont la section perpendiculaire à l'axe XX' a une aire $S_3$, et que la tige de manoeuvre traverse le volume intérieur destiné à accueillir le fluide caloporteur, on déduira utilement la section $S_3$ de la projection sur un plan perpendiculaire à l'axe XX' du volume intérieur contenant le fluide caloporteur sous pression.

La description qui suit s'appuie sur un exemple de réalisation de l'invention et sur les figures 1 à 3 dans lesquelles :

- la figure 1 représente une vue en coupe d'un dispositif selon l'invention en position semi-ouverte,
- la figure 2 représente le même dispositif en position verrouillée et fermée, dans lequel l'enceinte de reprise n'est pas mise sous pression de manière à faire apparaître les principaux jeux entre les pièces du moule,
- la figure 3 représente le dispositif de la figure 2 après la mise en pression de l'enceinte de reprise.

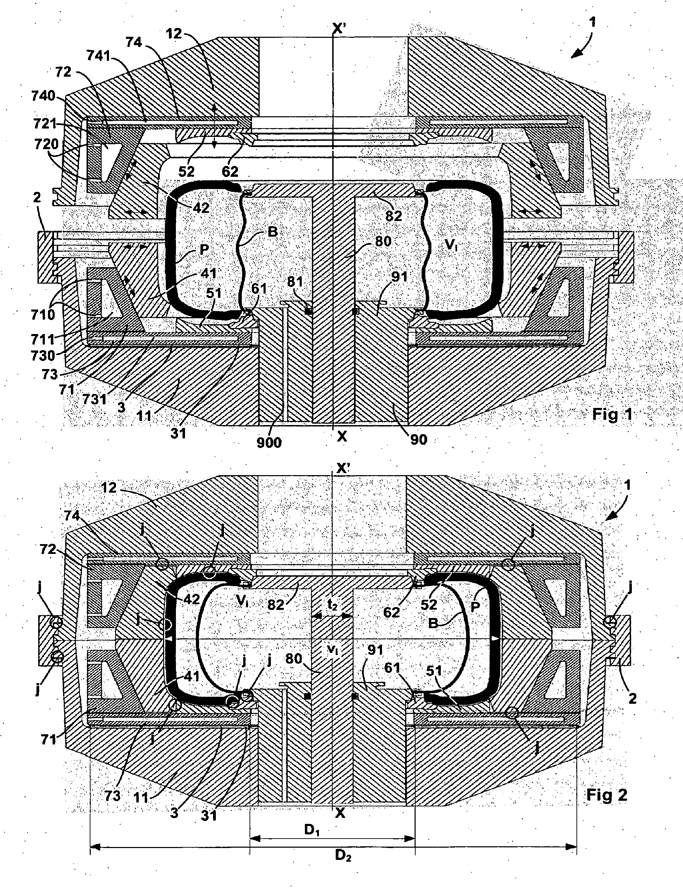

Le dispositif de vulcanisation 1 illustré dans une configuration semi ouverte à la figure 1, est un dispositif de type container comprenant une cuve de vulcanisation de forme circulaire comprenant une cuve inférieure 11 et une cuve supérieure 12. Ces deux cuves sont mobiles axialement l'une par rapport à l'autre selon l'axe XX'. Un moyen 2 de verrouillage rotatif autour de l'axe XX', permet de maintenir la cuve inférieure et la cuve supérieure en position fermée pendant la durée de la vulcanisation. Le mouvement axial des cuves, et le mouvement rotatif du moyen de verrouillage, sont animés mécaniquement par des moyens de manoeuvre (non illustrés).

Le moule placé à l'intérieur de la cuve comprend une coquille inférieure 51 et une coquille supérieure 52, destinées à mouler respectivement le flanc inférieur et le flanc supérieur d'un pneumatique P, ainsi qu'un anneau talon inférieur 61 et un anneau talon supérieur 62, destinés respectivement à mouler le talon inférieur et le talon supérieur dudit pneumatique. La coquille inférieure 51 et l'anneau talon inférieur 61 sont rendus solidaires des mouvements de la cuve inférieure 11, et la coquille supérieure 52 et l'anneau talon 62 sont fixés à la cuve supérieure 12.

Une pluralité de secteurs portant l'empreinte de la bande de roulement est répartie circulairement autour de l'axe XX'. Dans le cas du dispositif servant de support à la présente description, les secteurs comprennent un jeu de secteurs inférieurs 41 solidaires des mouvements de la cuve inférieure, et un jeu de secteurs supérieurs 42 solidaires des mouvements de la cuve supérieure.

Chaque jeu de secteurs est supporté par une couronne de serrage inférieure 71 et une couronne de serrage supérieure 72, solidaires respectivement de la cuve inférieure 11 et de la cuve supérieure 12. La face radialement interne de chacune des couronnes de serrage forme un angle donné avec la direction axiale. Chaque secteur est relié à la couronne par l'intermédiaire d'une glissière (non représentée), placée à l'intersection d'un plan radial avec la face radialement interne de la couronne, et dans laquelle ledit secteur peut se déplacer librement sous l'action d'un ressort de rappel (non représenté). Il résulte de ce montage que, lorsque le mouvement axial des secteurs est bloqué, le mouvement axial des couronnes provoque un mouvement radial des secteurs. Ce qui se produit lors de la fermeture, lorsque les faces axialement opposées des secteurs rentrent en contact les unes avec les autres, et lors de l'ouverture lorsque les secteurs sont maintenus par les empreintes de la sculpture du pneumatique.

Les couronnes de serrage peuvent comporter chacune une cavité circulaire, respectivement 711 et 721, dans lesquelles circule un fluide caloporteur par l'intermédiaire des conduits 710 et 720.

De manière alternative, il est également possible de réaliser un dispositif de vulcanisation comprenant un seul jeu de secteurs solidaire par exemple de la cuve inférieure. Dans ce cas, une seule couronne de serrage solidaire des mouvements de la cuve supérieure est nécessaire. Le mouvement axial de la couronne de serrage lors de la fermeture provoque le mouvement radial des secteurs.

Dans la forme de réalisation de l'invention illustrée par les figures 1 à 3, les coquilles inférieures et supérieures ainsi que les couronnes de serrage inférieures et supérieures sont fixées respectivement sur un plateau chauffant inférieur 73 et un plateau chauffant supérieur 74 comportant chacun une chambre annulaire, respectivement 731 et 741, dans lesquelles circule un fluide caloporteur amené par les conduits 730 et 740.

Le plateau chauffant inférieur 73 est relié à la cuve par l'intermédiaire d'une enceinte de reprise de forme annulaire 3. La face axialement externe du plateau chauffant inférieur 73 est en contact avec la face axialement interne de l'enceinte de reprise 3, et la face axialement externe de l'enceinte de reprise 3 est en contact avec la partie interne de la cuve inférieure 11.

L'enceinte de reprise comporte une chambre annulaire 31 dans laquelle circule un fluide sous pression. La paroi axialement interne de la chambre annulaire est mobile axialement sous l'effet de la mise sous une pression $P_2$ de la chambre annulaire, et fonctionne de manière analogue à un vérin annulaire.

L'enceinte de reprise a un diamètre intérieur $D_1$ et un diamètre extérieur $D_2$, comme cela est illustré à la figure 2.

L'enceinte de reprise peut être formée par les parois rigides d'une chambre annulaire dont une paroi est mobile axialement. De manière alternative, lorsque la pression $P_2$ reste peu élevée, ce qui est le cas dans la plupart des dispositifs de vulcanisation, il est possible d'utiliser une chambre à paroi souples se gonflant dans la direction axiale sous l'effet de la pression $P_2$.

La projection du volume de l'enceinte de reprise sur un plan perpendiculaire à l'axe XX' définit une surface dont l'aire est égale à $S_2$. Dans le cas présent,

$$S_2 = \pi(D_2^2 - D_1^2)/4 \; .$$

On observera que, lorsque le dispositif de vulcanisation ne comporte pas de plateau chauffant, l'enceinte de reprise est placée directement entre la face axialement externe de la coquille inférieure et le fond de la cuve inférieure.

De préférence on disposera une seule enceinte de reprise placée indistinctement entre la partie axialement externe de la coquille supérieure 52 du moule et le fond de la cuve supérieure 12 ou entre la face axialement externe de la coquille inférieure 51 et le fond de la cuve inférieure 11 de manière à conserver une référence géométrique fixe du coté axial de la cuve faisant face au coté où est placé ladite enceinte de reprise.

Un plateau inférieur 91, mobile axialement sous l'action d'un moyeu 90 de diamètre $t_2$, et un plateau supérieur 82, également mobile selon la direction axiale indépendamment du plateau inférieur sous l'action d'une tige 80 de diamètre $t_1$, viennent en appui sur les portées radialement internes respectivement de l'anneau talon inférieur 61 et de l'anneau talon supérieur 62. La tige 80 coulisse axialement dans le moyeu 90. Un joint torique 81 assure l'étanchéité entre la tige 80 et le moyeu 90. Les mouvements axiaux du plateau inférieur et du plateau supérieur sont animés par lesdits moyens de manoeuvre (non représentés). Il est aussi possible de manière alternative de concevoir un dispositif dans lequel la tige 80 pilotant le mouvement du plateau supérieur 82 pénètre dans la cuve par la partie supérieure.

Il peut également s'avérer intéressant de rendre l'anneau talon inférieur 61 solidaire du plateau inférieur 91, de manière à régler la position axiale du pneumatique P pendant les phases d'ouverture et de fermeture.

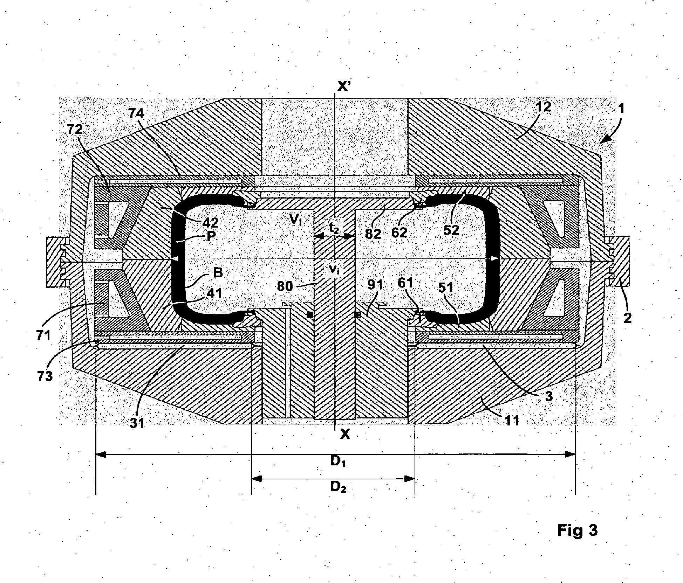

Le dispositif de vulcanisation étant ainsi configuré, les parois internes du plateau inférieur 91 et du plateau supérieur 82, de l'anneau talon inférieur 61 et de l'anneau talon supérieur 62, de la coquille inférieure 51 et de la coquille supérieure 52, des secteurs inférieurs 41 et des secteurs supérieurs 42, définissent, lorsque le moule est en position fermée, comme cela est illustré à la figure 2 ou 3, un volume intérieur $V_i$ destiné à recevoir, pendant la phase de vulcanisation, un fluide caloporteur sous une pression $P_1$. Un canal 900 est prévu pour faire pénétrer et pour évacuer ledit fluide caloporteur.

Le diamètre intérieur du volume $V_i$ est noté $v_i$ (voir figure 2).

La projection du volume intérieur $V_i$ sur un plan perpendiculaire à l'axe XX' définit une aire de surface $S_1$. Le calcul de la projection de ce volume doit tenir compte de la section $S_3$ de la tige 80. Dans le cas servant de base à la présente description, $S_1 = \pi(v_i^2 - t_2^2)/4$ .

Dans le cas où la tige 80 ne traverse pas le volume intérieur $V_i$, il n'est pas nécessaire de déduire la section $S_3$ de ladite tige pour obtenir la valeur de la section $S_1$.

Il est souvent avantageux de relier les circonférences radialement externes du plateau inférieur et du plateau supérieur par une membrane cylindrique, souple, élastique et étanche B, de manière à isoler la paroi radialement interne du pneumatique P du fluide circulant dans le volume intérieur $V_i$. Le calcul de la surface $S_1$ reste inchangé.

La figure 2 illustre le dispositif de vulcanisation en position fermée et verrouillée avant la montée en pression du fluide caloporteur à l'intérieur du volume $V_i$.

Les jeux mécaniques entre les cuves inférieures et supérieures, respectivement 11 et 12, et le moyen de verrouillage 2, ainsi qu'entre les différentes pièces du moule, sont repérés par la lettre « j ». Ces jeux ont tendance à s'accroître lors de la montée en pression du fluide dans le volume intérieur Vi, qui a pour effet de provoquer des mouvements non désirés des pièces de moule les unes par rapport aux autres.

Pour annuler ces mouvements, il est proposé, selon l'invention, de définir judicieusement la géométrie des surfaces $S_1$ et $S_2$. Pour cela il convient de s'assurer, en ajustant par exemple la valeur de la pression $P_2$, que le produit de la pression $P_1$ par la surface $S_1$ est inférieur au produit de la surface $S_2$ par la pression $P_2$. La force axiale exercée par la paroi mobile de l'enceinte de reprise sera alors supérieure à la composante axiale des forces engendrées par la pression dans le volume $V_i$. Les jeux mécaniques « j » sont alors supprimés comme cela est illustré à la figure 3.

Il est alors possible de tirer partie de cet arrangement selon l'invention. En particulier, on peut induire un serrage supplémentaire des pièces de moule en prévoyant que la force exercée par la paroi de l'enceinte de reprise 3 soit très supérieure à la force exercée par la pression dans le volume $V_i$. On peut pour cela augmenter autant que nécessaire la pression $P_2$. Toutefois, on observera que cette forme de réalisation nécessite de relier la boite à une source hydraulique supplémentaire d'un fluide à une pression donnée $P_2$, pour alimenter l'enceinte de reprise.

Aussi, une première forme de réalisation avantageuse consiste à s'assurer que la surface $S_2$ est supérieure, voire très supérieure, à la surface $S_1$. Dans ce cas, il est possible de remplir l'enceinte de reprise à l'aide du fluide caloporteur. La pression $P_2$ peut alors être égale à la pression $P_1$, tout en respectant l'inégalité des forces axiales recherchée.

Si nécessaire on adaptera les moyens d'introduction du fluide caloporteur dans l'enceinte de reprise pour gérer de manière indépendante le volume intérieur Vi et le volume de l'enceinte de reprise en veillant particulièrement au cas où le fluide caloporteur est susceptible de changer de phase en cédant ses calories.

Le faible volume de l'enceinte de reprise permet par ailleurs de n'utiliser qu'une très faible partie du fluide caloporteur.

Une autre forme de réalisation avantageuse consiste, comme cela est illustré dans le dispositif servant de support à la présente description, à rendre les couronnes de serrage solidaires des plateaux 73 et 74 supportant les coquilles 51 et 52. Dans cette configuration, le complément de serrage axial induit par l'enceinte de reprise 3 sur les couronnes de serrage 71 et 72 permet d'augmenter le serrage radial des secteurs.

Alternativement, il est possible de prévoir une première enceinte de reprise pour compenser les forces d'ouverture axiale des pièces du moule et une deuxième enceinte de reprise, indépendante de la première, et placée entre les couronnes de serrage et la cuve pour engendrer un effort de serrage radial supplémentaire des secteurs.

On observera également qu'il n'est plus nécessaire d'adapter le moyen de verrouillage 2 permettant de maintenir les cuves inférieures et supérieures en position fermée pour induire un serrage suffisant à pré-contraindre les pièces du moule pour supporter les effets de la pression. Les forces nécessaires pour actionner ce moyen de fermeture sont réduites, et il en résulte une meilleure efficacité et un allègement de ce dispositif.

**Revendications**

**1.** Dispositif de vulcanisation (1) d'un pneumatique (P), comprend une boite de vulcanisation cylindrique d'axe XX', formée d'une cuve inférieure (11) et d'une cuve supérieure (12), mobiles axialement l'une par rapport à l'autre, et des moyens de verrouillage (2) de la cuve inférieure (11) et de la cuve supérieure (12) aptes à maintenir lesdites cuve inférieure et supérieure en position fermée pendant la durée de la vulcanisation, et définissant une enceinte contenant

    - un moule dont les parois internes sont destinées à venir en contact avec le pneumatique,
    - un plateau inférieur (91) et un plateau supérieur (82) venant respectivement en appui sur les portées radialement internes des parties du moule destinées à mouler le talon inférieur (61) et le talon supérieur (62) dudit pneumatique (P) lorsque la cuve est en position fermée,

de sorte que, lorsque la cuve (1) est en position fermée, les parois internes du moule et des plateaux inférieur et supérieur définissent un volume intérieur ($V_i$) fermé destiné à recevoir un fluide caloporteur à une pression $P_1$, la projection dudit volume intérieur ($V_i$) sur un plan perpendiculaire à l'axe XX' définissant une surface dont l'aire est égale à $S_1$, **caractérisé en ce qu**'une enceinte de reprise (3) destinée à accueillir un fluide à une pression $P_2$ et comprenant une paroi mobile axialement sous l'action dudit fluide, est disposée axialement entre les parois axialement externe des pièces du moule et la cuve de vulcanisation, la projection dudit volume de ladite enceinte de reprise sur un plan perpendiculaire à l'axe XX' définissant une surface dont l'aire est égale à $S_2$, telle que $S_2*P_2$ soit supérieur à $S_1*P_1$ de sorte que, lorsque le dispositif est verrouillé et mis sous pression, la paroi mobile exerce sur les pièces du moule une force axiale supérieure à la résultante axiale des forces exercées par le fluide caloporteur sur les pièces dudit moule et tendant provoquer l'ouverture axiale des pièces dudit moule.

**2.** Dispositif selon la revendication 1 dans lequel les parois de l'enceinte de reprise (3) sont formées par une membrane souple de surface $S_2$.

**3.** Dispositif selon la revendication 1 dans lequel les parois de l'enceinte de reprise (3) sont formées par des parois rigides formant une chambre annulaire dans laquelle se déplace axialement une paroi mobile de surface $S_2$.

**4.** Dispositif selon la revendication 1 dans lequel l'aire de la surface $S_2$ est supérieure à l'aire de la surface $S_1$.

**5.** Dispositif selon la revendication 4 dans lequel le fluide est introduit dans l'enceinte de reprise à une pression $P_2$ identique à la pression $P_1$ du fluide caloporteur introduit dans le volume intérieur $V_i$.

**6.** Dispositif selon la revendication 5 dans lequel le fluide caloporteur et le fluide introduit dans l'enceinte de reprise est le même.

**7.** Dispositif selon l'une des revendications 1 à 6 dans lequel le moule comprend :

    - une coquille (51) et un anneau talon (61) inférieur et une coquille (52) et un anneau talon (62) supérieur destinés à mouler les flancs et le talon du pneumatique et aptes à se rapprocher axialement l'un de l'autre,

- une pluralité de secteurs répartis circulairement (41, 42) portant l'empreinte destinée à mouler la bande de roulement et aptes à se déplacer radialement et, lorsque la cuve est en position fermée, à venir en contact, avec les coquilles inférieure (51) et supérieure (52) lors du déplacement des segments (41, 42) dans la direction radialement interne.

8. Dispositif selon la revendication 7 dans lequel les secteurs (41, 42) se déplacent radialement sous l'action d'au moins une couronne de serrage circulaire (71, 72), solidaire des mouvements de la cuve inférieure ou/et de la cuve supérieure, et coopérant avec les faces radialement externes desdits secteurs (41, 42).

9. Dispositif selon la revendication 8 dans lequel l'enceinte de reprise (3) est également disposée axialement entre la cuve et la face axialement externe d'une couronne (71), de sorte que la force axiale exercée par la paroi mobile de l'enceinte de reprise (3) sur ladite couronne, lorsque le fluide contenu par ladite enceinte de reprise est porté à là pression $P_2$, exerce un complément de serrage radial sur lesdits secteurs.

10. Dispositif selon la revendication 9 dans lequel un plateau chauffant (73) porte une couronne de serrage (71), une coquille (51) et un anneau talon (61), et dans lequel l'enceinte de reprise (3) est interposée entre la paroi axialement externe du plateau chauffant (73) et la cuve (11).

11. Dispositif selon l'une des revendications 1 à 10 dans lequel une membrane élastique souple et étanche (B) de forme sensiblement cylindrique est fixée par ses deux extrémités axiales sur le plateau inférieur (91) et sur le plateau supérieur (81) de manière à s'interposer entre la surface interne pneumatique (P) et le fluide caloporteur.

12. Dispositif selon l'une des revendications 1 à 11 dans lequel le plateau supérieur (82) est porté par une tige de manoeuvre (80) dont la section perpendiculaire à l'axe XX' a une aire $S_3$ et qui traverse le volume intérieur destiné à accueillir le fluide caloporteur, de sorte que la projection sur un plan perpendiculaire à l'axe XX' du volume intérieur $V_i$ contenant le fluide caloporteur sous pression est amputée de la section $S_3$.

**Patentansprüche**

1. Vorrichtung (1) zur Vulkanisierung eines Luftreifens (P), die ein zylindrisches Vulkanisierungsgehäuse einer Achse XX', das von einer unteren Wanne (11) und einer oberen Wanne (12) gebildet wird, die axial zueinander beweglich sind, und Verriegelungseinrichtungen (2) der unteren Wanne (11) und der oberen Wanne (12) enthält, die die untere und obere Wanne während der Dauer der Vulkanisierung in der geschlossenen Stellung halten können, und eine Hülle definiert, die enthält

    - ein Formwerkzeug, dessen Innenwände dazu bestimmt sind, mit dem Luftreifen in Kontakt zu kommen,
    - eine untere Platte (91) und eine obere Platte (82), die auf den radial inneren Auflageflächen der Teile des Formwerkzeugs in Auflage kommen, die dazu bestimmt sind, den unteren Wulst (61) und den oberen Wulst (62) des Luftreifens (P) zu formen, wenn die Wanne in der geschlossenen Stellung ist,

so dass, wenn die Wanne (1) in der geschlossenen Stellung ist, die Innenwände des Formwerkzeugs und der unteren und oberen Platte ein geschlossenes Innenvolumen ($V_i$) definieren, das dazu bestimmt ist, ein Wärmeträgerfluid auf einem Druck $P_1$ zu empfangen, wobei die Projektion des Innenvolumens ($V_i$) auf eine Ebene lotrecht zur Achse XX' eine Fläche definiert, deren Flächeneinheit gleich $S_1$ ist, **dadurch gekennzeichnet, dass** eine Wiederaufnahmehülle (3), die dazu bestimmt ist, ein Fluid auf einem Druck $P_2$ zu empfangen, und eine unter der Wirkung des Fluids axial bewegliche Wand enthält, axial zwischen den axial äußeren Wänden der Bauteile des Formwerkzeugs und der Vulkanisierungswanne angeordnet ist, wobei die Projektion des Volumens der Wiederaufnahmehülle auf eine Ebene lotrecht zur Achse XX' eine Fläche definiert, deren Flächeneinheit gleich $S_2$ ist, so dass gilt, dass $S_2*P_2$ größer als $S_1*P_1$ ist, damit, wenn die Vorrichtung verriegelt und unter Druck gesetzt ist, die bewegliche Wand auf die Bauteile des Formwerkzeugs eine axiale Kraft größer als die axiale Resultierende der vom Wärmeträgerfluid auf die Bauteile des Formwerkzeugs ausgeübten Kräfte ausübt und dahin tendiert, die axiale Öffnung der Bauteile des Formwerkzeugs zu bewirken.

2. Vorrichtung nach Anspruch 1, wobei die Wände der Wiederaufnahmehülle (3) von einer biegsamen Membran einer Fläche $S_2$ gebildet werden.

3. Vorrichtung nach Anspruch 1, wobei die Wände der Aufnahmehülle (3) von steifen Wänden gebildet werden, die eine Ringkammer bilden, in der eine bewegliche Wand einer Fläche $S_2$ sich axial verschiebt.

4. Vorrichtung nach Anspruch 1, wobei die Flächeneinheit der Fläche $S_2$ größer ist als die Flächeneinheit der Fläche $S_1$.

**5.** Vorrichtung nach Anspruch 4, wobei das Fluid in der Wiederaufnahmehülle auf einem Druck $P_2$ gleich dem Druck $P_1$ des in das Innenvolumen $V_i$ eingeführten Wärmeträgerfluids eingeführt wird.

**6.** Vorrichtung nach Anspruch 5, wobei das Wärmeträgerfluid und das in die Wiederaufnahmehülle eingeführte Fluid gleich sind.

**7.** Vorrichtung nach einem der Ansprüche 1 bis 6, wobei das Formwerkzeug enthält:

- eine Schale (51) und einen unteren Wulstring (61) und eine Schale (52) und einen oberen Wulstring (62), die dazu bestimmt sind, die Flanken und den Wulst des Luftreifens zu formen, und sich axial einander annähern können,
- eine Vielzahl von kreisförmig verteilten Sektoren (41, 42), die den Abdruck tragen, der dazu bestimmt ist, den Laufstreifen zu formen, und sich radial verschieben und, wenn die Wanne in der geschlossenen Stellung ist, mit der unteren (51) und oberen Schale (52) bei der Verschiebung der Segmente (41, 42) in der radial inneren Richtung in Kontakt kommen können.

**8.** Vorrichtung nach Anspruch 7, wobei die Sektoren (41, 42) sich radial unter der Wirkung mindestens eines kreisförmigen Klemmkranzes (71, 72) verschieben, der kraftschlüssig mit den Bewegungen der unteren Wanne und/oder der oberen Wanne verbunden ist und mit den radial äußeren Seiten der Sektoren (41, 42) zusammenwirkt.

**9.** Vorrichtung nach Anspruch 8, wobei die Wiederaufnahmehülle (3) ebenfalls axial zwischen der Wanne und der axial äußeren Seite eines Kranzes (71) angeordnet ist, so dass die von der beweglichen Wand der Wiederaufnahmehülle (3) auf den Kranz ausgeübte axiale Kraft, wenn das in der Wiederaufnahmehülle enthaltene Fluid auf den Druck $P_2$ gebracht wird, eine zusätzliche radiale Klemmkraft auf die Sektoren ausübt.

**10.** Vorrichtung nach Anspruch 9, wobei eine Heizplatte (73) einen Klemmkranz (71), eine Schale (51) und einen Wulstring (61) trägt, und wobei die Wiederaufnahmehülle (3) zwischen die axial äußere Wand der Heizplatte (73) und die Wanne (11) eingefügt ist.

**11.** Vorrichtung nach einem der Ansprüche 1 bis 10, wobei eine biegsame und dichte elastische Membran (B) von im Wesentlichen zylindrischer Form mit ihren beiden axialen Enden an der unteren Platte (91) und an der oberen Platte (81) so befestigt ist, dass sie sich zwischen die Innenfläche des Luftreifens (P) und das Wärmeträgerfluid schiebt.

**12.** Vorrichtung nach einem der Ansprüche 1 bis 11, wobei die obere Platte (82) von einer Betätigungsstange (80) getragen wird, deren Abschnitt lotrecht zur Achse XX' eine Flächeneinheit $S_3$ hat, und die das Innenvolumen durchquert, das für den Empfang des Wärmeträgerfluids bestimmt ist, so dass die Projektion auf eine Ebene lotrecht zur Achse XX' des das unter Druck stehende Wärmeträgerfluid enthaltenden Innenvolumens $V_i$ um den Abschnitt $S_3$ reduziert ist.

**Claims**

**1.** Device (1) for vulcanizing a tyre (P), comprising a cylindrical vulcanization housing with an axis XX', formed by a lower pan (11) and an upper pan (12) which are movable axially with respect to one another, and means (2) for locking the lower pan (11) and upper pan (12), these means being adapted to keep said lower and upper pans in the closed position during vulcanization, and delimiting an enclosure containing:

- a mould whose inner walls are intended to come into contact with the tyre, and
- a lower plate (91) and an upper plate (82) which come to bear, respectively, on the radially inner regions of the mould parts which are intended to mould the lower bead (61) and the upper bead (62) of said tyre (P) when the pan is in the closed position,

in such a way that, when the pan (1) is in the closed position, the inner walls of the mould and of the lower and upper plates delimit a closed internal volume $(V_i)$ intended to receive a heat transfer fluid at a pressure $P_1$, the projection of said internal volume $(V_i)$ on a plane perpendicular to the axis XX' forming a surface whose area is $S_1$, **characterized in that** a reshaping envelope (3), intended to receive a fluid at a pressure $P_2$ and comprising a wall which is movable axially under the action of said fluid, is positioned axially between the axially outer walls of the mould parts and the vulcanization pan, the projection of said volume of said reshaping envelope on a plane perpendicular to the axis XX' delimiting a surface with an area $S_2$, such that $S_2 * P_2$ is greater than $S_1 * P_1$, in such a way that, when the device is locked and pressurized, the movable wall exerts on the mould parts an axial force greater than the resultant of the axial forces which are exerted by the heat transfer fluid on the mould parts and tend to cause the axial opening of the parts of said mould.

**2.** Device according to Claim 1, in which the walls of the reshaping envelope (3) are formed by a flexible membrane with a surface area $S_2$.

3. Device according to Claim 1, in which the walls of the reshaping envelope (3) are formed by rigid walls forming an annular chamber in which a movable wall with a surface area $S_2$ moves axially.

4. Device according to Claim 1, in which the area of the surface $S_2$ is greater than the area of the surface $S_1$.

5. Device according to Claim 4, in which the fluid is introduced into the reshaping envelope at a pressure $P_2$ identical to the pressure $P_1$ of the heat transfer fluid introduced into the internal volume $V_i$.

6. Device according to Claim 5, in which the heat transfer fluid and the fluid introduced into the reshaping envelope are the same.

7. Device according to any of Claims 1 to 6, in which the mould comprises:

   - a lower shell (51) and bead ring (61) and an upper shell (52) and bead ring (62), intended to mould the sidewalls and beads of the tyre, and adapted to move towards each other axially,
   - a plurality of circularly distributed sectors (41, 42), carrying the impression intended to mould the tread and adapted to be moved radially and, when the pan is in the closed position, to come into contact with the lower (51) and upper (52) shells as the segments (41, 42) move in the radially inward direction.

8. Device according to Claim 7, in which the sectors (41, 42) move radially under the action of at least one circular clamping ring (71, 72), which moves integrally with the lower pan and/or the upper pan, and which interacts with the radially outer faces of said sectors (41, 42).

9. Device according to Claim 8, in which the reshaping envelope (3) is also positioned axially between the pan and the axially outer face of a ring (71), in such a way that the axial force exerted by the movable wall of the reshaping envelope (3) on said ring when the fluid contained by said reshaping envelope is brought to the pressure $P_2$ exerts an additional radial clamping force on said sectors.

10. Device according to Claim 9, in which a heating plate (73) carries a clamping ring (71), a shell (51) and a bead ring (61), and in which the reshaping envelope (3) is interposed between the axially outer wall of the heating plate (73) and the pan (11).

11. Device according to any of Claims 1 to 10, in which a flexible resilient sealing membrane (B) of substantially cylindrical shape is fixed by its two axial edges to the lower plate (91) and the upper plate (81) so as to be interposed between the inner surface of the tyre (P) and the heat transfer fluid.

12. Device according to any of Claims 1 to 11, in which the upper plate (82) is carried by an operating shaft (80) whose cross section perpendicular to the axis XX' has an area $S_3$, and which passes through the internal volume intended to receive the heat transfer fluid, in such a way that the projection on a plane perpendicular to the axis XX' of the internal volume $V_i$ containing the pressurized heat transfer fluid is decreased by the amount of the cross section $S_3$.

EP 2 629 967 B1

Fig 1

Fig 2

Fig 3

**EP 2 629 967 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5866170 A
- US 4245971 A
- JP 2000158448 A
- US 5820886 A